# EUROPEAN PATENT APPLICATION

(11) **EP 4 589 433 A1**
(43) Date of publication of application: **23.07.2025**
(21) Application number: 25152019.3
(22) Date of filing: 15.01.2025
(51) Int. Cl.: G06F 9/48, G06F 8/40, G06F 9/455, G06N 20/00, G06F 9/50

(54) **GENERIC INFERENCE ENGINE FOR AI/ML MODELS COMPATIBLE WITH CLOUD, ON PREMISES, AND EDGE DEPLOYMENT**

(30) Priority: 18.01.2024 IN 202441003575
(71) Applicant: ABB Schweiz AG, 5400 Baden (CH)
(72) Inventor: REDDY, Nitesh Nag, 562114 Bangalore (IN); PATIL, Pramod, 560056 Bangalore (IN); R, Chandrashekar, 571430 Mandya (IN)
(74) Representative: Zimmermann & Partner Patentanwälte mbB

(57) **Abstract**

A method for generating an inference for target data using a generic inference engine is provided. A model and target data are received from a client device. The method determines whether a runtime associated with the model is available in the generic inference engine. Based on determining that the runtime associated with the model is available in the generic inference engine, the method determines whether the runtime is already executing in a virtual environment of the generic inference engine. The model is loaded in the runtime, based on determining that the runtime is already executing in a virtual environment of the generic inference engine. The target data is provided as an input to the model. An inference based on the target data is received as an output from the model. The inference is provided to the client device.

## Description

### FIELD

The present disclosure relates to an inference engine. In particular, the present disclosure relates to a generic inference engine for different kinds of models.

### BACKGROUND

Typically, artificial intelligence/machine learning (AI/ML) models run on exclusive docker images and/or containers that embed a runtime environment required to run a specific model. Some industrial use cases demand simultaneous execution of thousands of AI/ML models. In such cases, maintaining and serving models with the approach of individual containers would be very difficult and expensive to host and maintain. Furthermore, in the case of edge deployments, it is practically impossible to orchestrate thousands of containers due to resource constraints and also constraints on managing the models.

### SUMMARY

A first aspect of the present disclosure provides a method for generating an inference for an target data using a generic inference engine, the method comprising: receiving, from a client device, details of a model to be inferred and target data; determining whether a runtime associated with the model is available in the generic inference engine; determining whether the runtime is already executing in a virtual environment of the generic inference engine based on determining that the runtime associated with the model is available in the generic inference engine; loading the model in the runtime, based on determining that the runtime is already executing in a virtual environment of the generic inference engine; providing the target data as an input to the model; receiving as an output from the model, an inference based on the target data; and providing the inference to the client device.

According to an implementation of the first aspect, determining whether the runtime associated with the model is available in the generic inference engine comprises: retrieving identifying information associated with the model; determining, using the identifying information, whether the model received from the client requires an open neural network exchange (ONNX) or a predictive model markup language (PMML) runtime; and retrieving a preset runtime as the runtime based on determining that the model received from the client requires the ONNX or the PMML runtime.

According to an implementation of the first aspect, based on determining that the model received from the client does not require the ONNX or the PMML runtime, the method further comprises: determining, using the identifying information, whether the model is present in a model tracking database for the model; retrieving a stored runtime associated with the model from an artifact store as the runtime based on determining that the model is present in the model tracking database.

According to an implementation of the first aspect, based on determining that the runtime associated with the model is not available in the generic inference engine, the method further comprises: retrieving identifying information associated with the model, wherein the identifying information comprises a list of libraries and dependencies required for the execution of the model; dynamically generating the runtime based on the list of libraries and dependencies; storing the runtime in a model runtime store; executing the runtime in a new virtual environment of the generic inference engine; and loading the model in the new virtual environment.

According to an implementation of the first aspect, based on determining that the runtime is not already executing in a virtual environment of the generic inference engine, the method further comprises: executing the runtime in a new virtual environment of the generic inference engine; and loading the model in the new virtual environment.

According to an implementation of the first aspect, the method further comprises: determining whether other models are being executed in the virtual environment; and deactivating the virtual environment, based determining no other models are being executed in the virtual environment.

According to an implementation of the first aspect, based on determining that other models are being executed in the virtual environment, the method further comprises: deactivating the virtual environment after the other models have completed execution.

According to an implementation of the first aspect, determining whether the runtime associated with the model is available in the generic inference engine comprises: retrieving identifying information associated with the model; determining, using the identifying information, whether the model received from the client requires a MATLAB or an R runtime; and retrieving a preset runtime as the runtime based on determining that the model received from the client requires a MATLAB or an R runtime.

A second aspect of the present disclosure provides a system for generating an inference for an target data using a generic inference engine, the system comprising: a controller configured to: receive, from a client device, details of a model to be inferred and target data; determine whether a runtime associated with the model is available in the generic inference engine; determine whether the runtime is already executing in a virtual environment of the generic inference engine based on determining that the runtime associated with the model is available in the generic inference engine; load the model in the runtime, based on determining that the runtime is already executing in a virtual environment of the generic inference engine; provide the target data as an input to the model; receive as an output from the model, an inference based on the target data; and provide the inference to the client device.

According to an implementation of the second aspect, determining whether the runtime associated with the model is available in the generic inference engine causes the controller to: retrieve identifying information associated with the model; determine, using the identifying information, whether the model received from the client requires an open neural network exchange (ONNX) or a predictive model markup language (PMML) runtime; and retrieve a preset runtime as the runtime based on determining that the model received from the client requires the ONNX or the PMMI, runtime.

According to an implementation of the second aspect, based on determining that the model received from the client does not require the ONNX or the PMML runtime, the controller is further configured to: determine, using the identifying information, whether the model is present in a model tracking database for the model; retrieve a stored runtime associated with the model from an artifact store as the runtime based on determining that the model is present in the model tracking database.

According to an implementation of the second aspect, based on determining that the runtime associated with the model is not available in the generic inference engine, the controller is further configured to: retrieve identifying information associated with the model, wherein the identifying information comprises a list of libraries and dependencies required for the execution of the model; dynamically generate the runtime based on the list of libraries and dependencies; store the runtime in a model runtime store; execute the runtime in a new virtual environment of the generic inference engine; and load the model in the new virtual environment.

According to an implementation of the second aspect, based on determining that the runtime is not already executing in a virtual environment of the generic inference engine, the controller is further configured to: execute the runtime in a new virtual environment of the generic inference engine; and load the model in the new virtual environment.

According to an implementation of the second aspect, the controller is further configured to: determine whether other models are being executed in the virtual environment; and deactivate the virtual environment, based determining no other models are being executed in the virtual environment.

According to an implementation of the second aspect, based on determining that other models are being executed in the virtual environment, the method further comprises: deactivate the virtual environment after the other models have completed execution.

According to an implementation of the second aspect, determining whether the runtime associated with the model is available in the generic inference engine causes the controller to: retrieve identifying information associated with the model; determine, using the identifying information, whether the model received from the client requires a MATLAB or an R runtime; and retrieve a preset runtime as the runtime based on determining that the model received from the client requires a MATLAB or an R runtime.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 illustrates a simplified block diagram depicting a system for registering and deploying models, according to one or more examples of the present disclosure;
FIG. 2 illustrates a simplified block diagram depicting a system for determining inferencing associated with a model, according to one or more examples of the present disclosure;
FIG. 3 illustrates a simplified block diagram of a generic inference engine, according to one or more examples of the present disclosure;
FIG. 4-6 illustrate exemplary process for invoking various models using the generic inference engine, according to one or more examples of the present disclosure;
FIG. 7 illustrates an exemplary processes for invoking the generic inference engine on an edge device, according to one or more examples of the present disclosure;
FIG. 8 illustrates a block diagram of an exemplary controller associated with the generic inference engine, according to one or more examples of the present disclosure; and
FIG. 9 illustrates an exemplary process for invoking a model using the generic inference engine, according to one or more examples of the present disclosure.

### DETAILED DESCRIPTION

Examples of the presented application will now be described more fully hereinafter with reference to the accompanying FIGs., in which some, but not all, examples of the application are shown. Indeed, the application may be exemplified in different forms and should not be construed as limited to the examples set forth herein; rather, these examples are provided so that the application will satisfy applicable legal requirements. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

Conventionally, artificial intelligence/machine learning (AI/ML) models run on exclusive docker images and/or containers that embed a runtime environment required to run a specific model. The present disclosure provides a way of executing AI/MI, models that eliminate the need of creating individual docker images for every AI/ML model by introducing a "Generic Inference Engine" logic. This approach is based on dynamic mapping, activation and deactivation of model runtimes during the inferencing.

For example, if there were 1000 different AI/ML models (non-open neural network exchange (ONNX) type), there would be a requirement to orchestrate 1000 separate docker images and/or containers to execute each of the different models. Even if it is assumed that each docker image/container consumes 10 millicore CPU and 200 mebibytes (Mi) memory in an idle state, a total infrastructure of 10,000 millicores of CPU and 200,000 Mi of memory may be required just to run the different containers/docker images in idle state.

In accordance with an embodiment of the present disclosure, the generic inference engine described in the present disclosure works with a 10 replica setup to achieve the hosting and concurrent inferencing of 1000 models, thereby reducing the resources required in operation. For example, the generic inference engine primarily works based on a concept of model runtimes (virtual environment) specific to a model, in which a runtime associated with each model is stored when the model is registered. In case the runtimes of different models are common, a common runtime may be shared across multiple models in order to reduce resource consumption during execution.

The generic inference engine is configured to dynamically activate a runtime, invoke the model within the runtime, and deactivate the runtime thereby re-moving the necessity of having individual containers (or docker images) running for each Al/ML model. This approach utilizes a plurality of frameworks, for example, the machine learning flow (MLFlow) framework, ONNX, predictive model markup language (PMML), wherever applicable to convert a model into a light weight, cross platform compatible model wherever applicable and utilize a runtime generated on the fly to invoke the model. This saves the compute resources, cost of hosting large number of models and provides ability to run multiple models on edge devices, for example tablets and mobile phones.

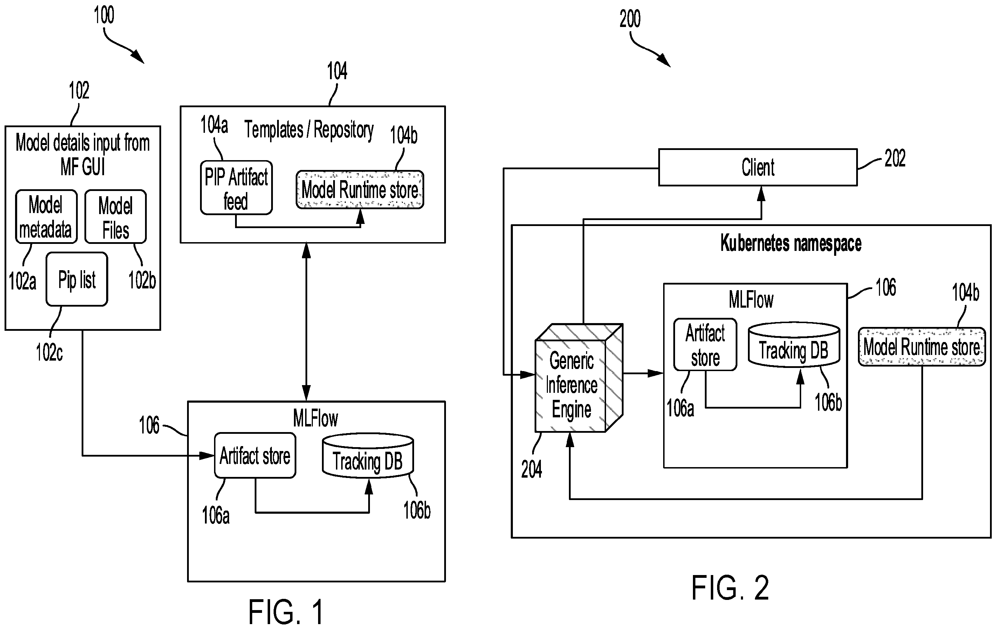

FIG. 1 illustrates a simplified block diagram depicting a system for registering and deploying models, according to one or more examples of the present disclosure. System 100 depicted in FIG. 1 includes a model input 102, a repository 104 and an MLFlow 106. Model input 102 includes model details pertaining to a new AI/ML model received from a model fabric graphic user interface. In some embodiments, the new AI/MI, model is to be registered using the system 100 before the generic inference engine is able to utilize the model for performing inferences. The model input 102, in the system of FIG. 1, includes model metadata 102a, model files 102b, and a PIP list 102c. In some cases, PIP list 102c may be a package management system written in a programming language (e.g., Python) and is used to install and manage software packages. For example, the PIP list 102c may include a list of libraries that are required to execute the new AI/MI, model. The model metadata 102a includes metadata associated with the new AI/ML model, the model files 102b includes program files and/or executable files associated with the new AI/ML model, and the PIP list 102c includes a list of libraries that are required to execute the new AI/ML model. The model input 102, including the model metadata 102a, the model files 102b, and the PIP list 102c is stored in an artifact store 106a.

The artifact store 106a is part of MLFlow framework 106. In addition to the artifact store 106a, the MLFlow framework 106 includes a tracking database 106b. Identifying information regarding the new AI/ML model, including the name, version, and deployment tracking may be stored in the tracking database 106b. The tracking database includes identifying information for every model that is registered using system 100 that may be accessed by the generic inference engine. In some embodiments, the information that is stored in the tracking database 106b, associated with the new model, is extracted from the model input 102 that is stored in the artifact store 106a. In some cases, upon receiving a request from a client, the system may search for a requested model in the tracking database using identifying information including the name, version, and deployment tracking.

System 100 also includes the repository 104 that includes a model runtime store 104b. The model runtime store 104b stores a runtime associated with the new AI/ML model that is received. In some embodiments, the runtime associated with the new AI/ML model is created using the PIP list 102c of model input 102. For example, the artifact store 106a may provide the PIP list 102c associated with the new AI/ML model to the model runtime store 104b. In such cases, the PIP list 102c may be provided by the artifact store 106a as a PIP artifact feed 104a to the runtime store 104b. In some cases, the PIP artifact feed 104a may be part of the artifact store 106a. Using the information in the PIP artifact feed 104a, a runtime is created for the new AI/ML model. For example, the PIP artifact feed 104a may include a list of libraries that are required to execute the new AI/ML model. The list of libraries, and related dependencies are installed in a runtime associated with the new AI/MI, model. The runtime that is created may be used to deploy the AI/ML model when needed. This runtime is stored in the model runtime store 104b for later use. The information associated with the new AI/ML model stored in the artifact store 106a is updated to include reference to the new runtime created for the new AI/ML model that is stored in the model runtime store 104b. For example, model metadata 102a associated with the new AI/ML model that is stored in the artifact store 106a, is updated with model information. In some cases, model information includes identifying information for the runtime associated with the new AI/ML model stored in the model runtime and deployment status.

FIG. 2 illustrates a simplified block diagram depicting a system for determining inferencing associated with a model, according to one or more examples of the present disclosure. System 200 of FIG. 2 depicts a client 202, a generic inference engine 204, the MLFlow 106, and the model runtime store 104b. In some embodiments, the model runtime store 104b is mapped to individual containers (or docker images/pods) generated by the generic inference engine 204. Each of the containers of the generic inference engine 204 continuously synchronizes with the model runtime store 104b and extracts the local virtual runtime within the container. In some examples, the generic inference engine 204 may check for updates in the model runtime store 104b for new runtimes that may be saved in the model runtime store 104. In case there are new runtimes in the model runtime store 104b, the new runtimes may be copied to the generic inference engine 204. An inbuilt scheduler may be embedded within the generic inference engine 204 to synchronize this at regular intervals.

A client may request a specific model to be deployed to perform an inference on a set of target data. The request of the client may be transmitted from the client device 202 to the generic inference engine 204. The request from the client device may include details of a specific model to be inferred, and target data on which the inference is supposed to be performed. The generic inference engine 204 may invoke the specific model that is requested by the client device 202 from the MLFlow 106. In some embodiments, the generic inference engine 204 may provide information identifying a specific model to the generic inference engine 204. The generic inference engine may use the identifying information for the specific model to search for the specific model in the MLFlow framework 106. For example, the generic inference engine 204 may use identifying information of the specific model to search for the model in the tracking database 106b. Upon determining that the specific model is present in the tracking database 106b, the generic inference engine 204 may retrieve information related to the specific model in artifact store 106a. In some embodiments, the information related to the specific model retrieved from the artifact store 106a includes model metadata 102a, model files 102b, and a PIP list 102c. The generic inference engine 204 may also retrieve a runtime associated with the specific model from the model runtime store 104b. The model information retrieved from the artifact store 106a and the runtime that is retrieved from the model runtime store 104b is provided to the generic inference engine 204. In some embodiments, the generic inference engine 204 may determine whether an instance of the runtime for the specific model that is provided by the model runtime store 104b is already executing. For example, the generic inference engine 204 may determine whether an instance of the runtime of the specific model is being executed using the deployment status of a runtime stored in the model runtime store 104b along with the runtime. In case the generic inference engine 204 determines that an instance of the runtime is already being executed, the generic inference engine 204 may proceed to load the specific model in the instance of the already executing runtime. This way, the generic inference engine 204 does not have to load a new runtime for every model, and the generic inference engine 204 is able to save processing resources.

In some embodiments, when the generic inference engine 204 determines that there are no already executing instances of the runtime of the specific model, the runtime provided by the model runtime store 104b may be implemented in a container and the specific model may be loaded in the runtime based on the information associated with the model retrieved from the artifact store 106b. Once the specific model is loaded in the runtime, the target data that is provided to the generic inference engine 204 by the client device 202 may be provided as an input to the specific model for generating an inference. Once the inference is generated, the generic inference engine 204 provides the inference to the client device 202. After the inference is generated, the generic inference engine 204 may deactivate the runtime. In some embodiments, the generic inference engine 204 may only deactivate the runtime if no other models are being executed in the runtime.

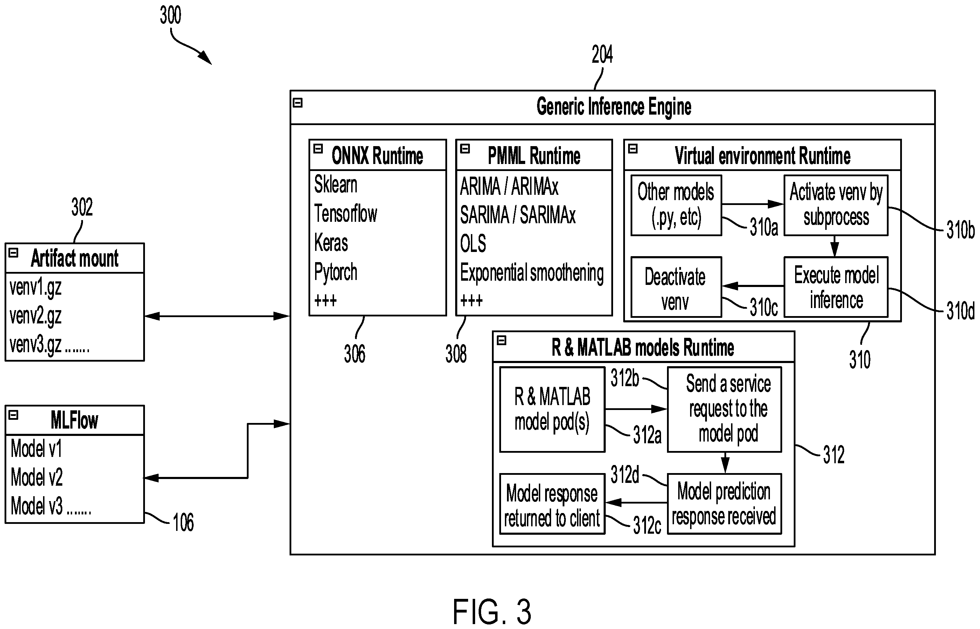

FIG. 3 illustrates a simplified block diagram of a generic inference engine, according to one or more examples of the present disclosure. System 300 of FIG. 3 depicts a detailed layout of the generic inference engine 204 of FIG. 2. Generic inference engine 204 includes some preset runtimes for specific kinds of AI/ML models. For example, 306 denotes runtimes that are stored in the generic inference engine 204 associated with ONNX models. ONNX models may be of different kinds such as Skleam, Tensorflow, Keras, Pytorch or others. When a client device 202 requests an ONNX-type model to perform an inference on target data, the generic inference engine 204 may dynamically generate a runtime to load the model and generate the inference. In some embodiments, the generic inference engine may retrieve a preset ONNX runtime for loading the model. For example, the runtime may be dynamically generated using preset information stored in the generic inference engine 204 associated with ONNX runtimes. Similarly, 308 denotes runtimes that are stored in the generic inference engine 204 associated with PMML models. PMML models may be of different kinds such as ARIMA/ARIMAx, SARIMA/SARIMAx, OLS, exponential smoothening, or others. When the client device 202 requests a PMML type model to perform an inference on target data, the generic inference engine 204 may dynamically generate a runtime to load the model and generate the inference. In some embodiments, the generic inference engine may retrieve a preset PMML runtime for loading the model. For example, the runtime may be dynamically generated using preset information stored in the generic inference engine 204 associated with PMML runtimes.

In some cases, there may be other model types that may be supported in the generic inference engine 204.

On the other hand, the in case the client device 202 requests to use a model that does not have a preset runtime stored in the generic inference engine 204, the generic inference engine 204 generates a virtual environment runtime for the model. The process to generate the virtual environment runtime is depicted in 310. At 310a, the generic inference engine 204 receives a request from a client device 202 to use a model that is not part of the generic inference engine 204. At 310b, the generic inference engine 204 activates a virtual environment for the model. In activating the virtual environment, the generic inference engine 204 may first search for the model in the tracking database 106b as described with respect to FIG. 2. In case the model has been previously requested, it may be registered in the tracking database 106b and a runtime associated with the model may be present in the model runtime store 104b. In case the model is present in the tracking database, a runtime associated with the model may be retrieved from the model runtime store 104b and executed in a virtual environment of the generic inference engine 204. The model may be loaded in the runtime. In some embodiments, an artifact mount 302 of the generic inference engine 204 may include the compressed files containing the runtimes as present in the model runtime store 104b.

When executing a runtime in a virtual environment, the generic inference engine 204 may extract the files necessary for the runtime from the artifact mount 302. The artifact mount 302 may be configured to synchronize with the virtual environments of the generic inference engine 204 at periodic intervals, such as every 10 seconds, 30 seconds, 60 seconds, etc., based on a requirement of a user and/or a system. Once the runtime is executed, the generic inference engine 204 may retrieve the model to be used for the inference from the MLFlow 106.

In case the tracking database does not contain the model, the model may be registered in the tracking database 106b using the process described in FIG. 1. Once the model is registered, information related to the model may be stored in the artifact store 106a. A runtime associated with the model may be generated using information from the artifact store 106a and stored in the model runtime store 104b. As disclosed above, the runtime associated with the model may include all the libraries and dependencies required to run the model preloaded in the runtime for quicker execution of the model. The runtime may then be generated by the generic inference engine 204 and the model may be loaded in the runtime. At 310c, an inference may be generated using the model loaded in the runtime. The inference may be generated by providing target data received from the client device 202 as an input to the model. The inference that is generated may be provided to the client device 202. At 3 10d, after the inference is generated, the generic inference engine 204 may deactivate the virtual environment that was executing the runtime with the model. In some embodiments, deactivating the virtual environment involves determining whether any other inference requests are being executed in the virtual environment. In case other inference requests are being executed in the virtual environment, the virtual environment may be deactivated after all the inference requests that are being executed are completed. In case no other inference requests are being executed in the virtual environment, the virtual environment may be deactivated.

In some embodiments, the client device 202 may request for a MATLAB or R model to perform an inference on target data. The process to generate an inference using an R or MATLAB model is depicted in process 312. At 312a, the generic inference engine 204 receives a request from a client device 202 to use an R or MATLAB model. At 312b, the generic inference engine 204 may send a service request to a container associated with the model. At 312c an inference is received from the POD associated with the model and at 312d, the inference associated with the model is reported to the client device 202.

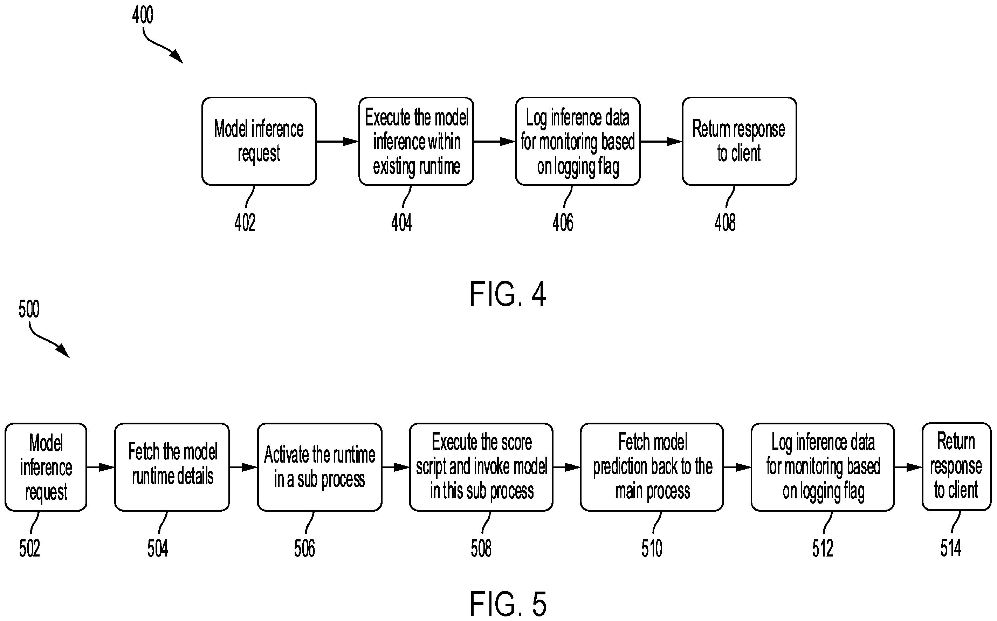

FIG. 4-7 illustrate exemplary processes for invoking various models using the generic inference engine, according to one or more examples of the present disclosure.

FIG. 4 illustrates an exemplary processes for invoking an ONNX or a PMML runtime using the generic inference engine, according to one or more examples of the present disclosure. The process 400 may be performed by the generic inference engine 204 of FIG. 3. However, it will be recognized that any of the following blocks may be performed in any suitable order and that the process 400 may be performed in any environment and by any suitable computing device and/or controller.

At 402, a model inference request is received from the client device 202 at the generic inference engine 204. In some embodiments, the model inference request may include target data and a model on which the target data is supposed to run. For example, the model inference request may include an ONNX or a PMMI, model to generate inference for target data.

At 404, the model inference is determined within existing runtime. For example, as is disclosed with respect to FIG. 3, runtimes associated with ONNX or PMML models are already stored in the generic inference engine 204. In such cases, the runtime may be dynamically generated using preset information stored in the generic inference engine 204 associated with ONNX or PMML models. Once the runtime is deployed, the PMML or ONNX model is loaded in the runtime for execution. The generic inference engine 204 executes the PMML or ONNX model in the runtime using the target data received from the client device 202 and generates an inference.

At 406, the generic inference engine logs inference data for monitoring based on a logging flag. For example, a logging flag may be used to enable data logging for model monitoring purposes. In cases where the logging flag is set as false, the data is not logged in the system for monitoring. The logging flag may be needed to differentiate model evaluation / test data against the actual production data that needs to be monitored.

At 408, the generic inference engine 204 provides the determined inference to the client device 202.

FIG. 5 illustrates an exemplary processes for invoking a virtual environment runtime using the generic inference engine, according to one or more examples of the present disclosure. The process 500 may be performed by the generic inference engine 204 of FIG. 3. However, it will be recognized that any of the following blocks may be performed in any suitable order and that the process 500 may be performed in any environment and by any suitable computing device and/or controller.

At 502, a model inference request is received from the client device 202 at the generic inference engine 204. In some embodiments, the model inference request may include target data and a model on which the target data is supposed to run. For example, the model inference request may include a model that does not have a preset runtime stored in the generic inference engine 204 to generate inference for target data.

At 504, the generic inference engine fetches the model runtime details. In some embodiments, fetching the model runtime details may include determining whether a runtime already exists from this model. In order to determine whether a runtime already exists for this model, the generic inference engine 204 may determine whether the model is registered in the tracking database 106b. In case the model is registered in the tracking database 106b, a runtime associated with the model may be present in the model runtime store 104b. In case the model is present in the tracking database, a runtime associated with the model may be retrieved from the model runtime store 104b. In case the tracking database does not contain the model, the model may be registered in the tracking database 106b using the process described in FIG. 1. Once the model is registered, information related to the model may be stored in the artifact store 106a. A runtime associated with the model may be generated using information from the artifact store 106a and stored in the model runtime store 104b.

At 506, the generic inference engine 204 activates the runtime in an associated sub process. For example, once the correct runtime model is retrieved, the generic inference engine 204 may execute the runtime in a virtual environment.

At 508, the generic inference engine 204 executes the score script and invokes the model in this sub process. For example, the model may be loaded in the runtime for execution. The inference may be generated by providing target data received from the client device 202 as an input to the model in the runtime. In some embodiments, the score script is a script that is used to pre-process the input data and send it to the model for a prediction. Once the prediction is done, the score script may also be responsible for post processing the predicted data and returning the final output to user. In some other embodiments, a sub-process may be considered as a thread / kernel which is instantiated dynamically when the model inference request is received from a client device 202. The virtual environment may be activated dynamically, the model may be inferenced and then the thread / kernel is killed after inference is completed.

At 510, the generic inference engine 204 fetches the model prediction back to the main process.

At 512, the generic inference engine 204 logs inference data for monitoring based on a logging flag.

At 514, the generic inference engine 204 provides the determined inference to the client device 202.

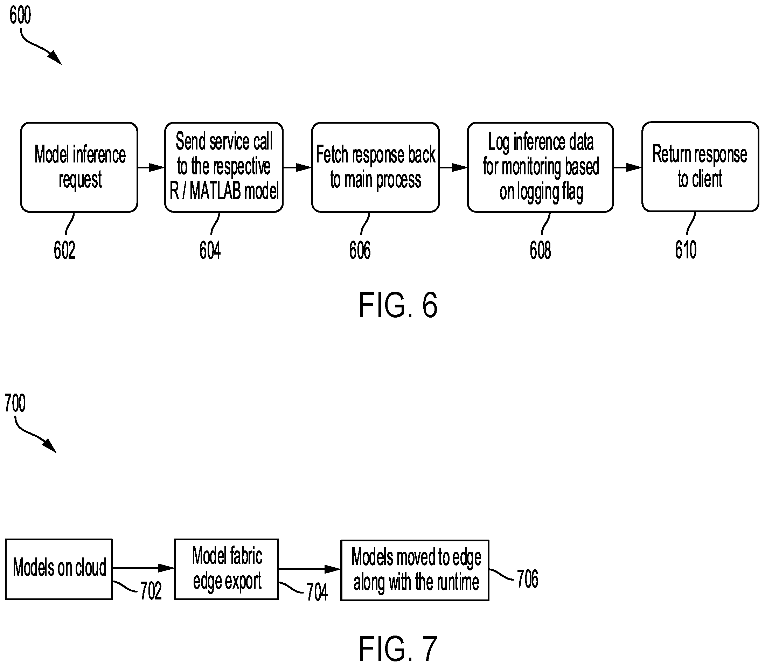

FIG. 6 illustrates an exemplary processes for invoking an R or MATLAB runtime using the generic inference engine, according to one or more examples of the present disclosure. The process 600 may be performed by the generic inference engine 204 of FIG. 3. However, it will be recognized that any of the following blocks may be performed in any suitable order and that the process 600 may be performed in any environment and by any suitable computing device and/or controller.

At 602, a model inference request is received from the client device 202 at the generic inference engine 204. In some embodiments, the model inference request may include target data and a model on which the target data is supposed to run. For example, the model inference request may include an R or MATLAB model to generate inference for target data.

At 604, the generic inference engine 204 sends a service call to the respective R/MATLAB model. In some embodiments, R and MATLAB models may be hosted as separate container images within the cluster. For example, one container per R / MATLAB model may be stored in the generic inference engine 204. The generic inference engine 204 may identify the appropriate model container as per the request and invoke the model prediction from the model container and return the final prediction to end user.

At 606, the generic inference engine 204, fetches a response back to main process.

At 608, the generic inference engine 204 logs inference data for monitoring based on a logging flag.

At 610, the generic inference engine 204 provides the determined inference to the client device 202. For example, the generic inference engine 204 may play a role of orchestrating the process of sending the inputs to the appropriate container and return back the response to user

FIG. 7 illustrates an exemplary processes for invoking the generic inference engine on an edge device, according to one or more examples of the present disclosure. The process 700 may be performed by the generic inference engine 204 of FIG. 3. However, it will be recognized that any of the following blocks may be performed in any suitable order and that the process 700 may be performed in any environment and by any suitable computing device and/or controller.

In some embodiments, the generic inference engine 204 is compatible to run on edge devices such as cell phones, tablets, or others. When running on the edge devices, the generic inference engine 204 may be configured to invoke the inference of models that are pushed from the cloud to the edge. In such examples, resources required to host and run multiple models of different types of runtimes can be invoked on an edge device with larger number of models.

At 702, the models that may be used to perform the inference are stored on the cloud.

At 704, the generic inference engine 204 on the edge device may request a particular model from the models stored on the cloud.

At 706, the requested model may be moved from the cloud to the edge device. In addition to the requested model, a runtime associated with the requested model may also be sent to the edge device for execution.

For edge export, the runtime and the model repository is packaged and shipped to the relevant edge device where the generic inference engine 204 may be running by default. On the edge device, the models and the runtimes are extracted and the execution of the model is performed.

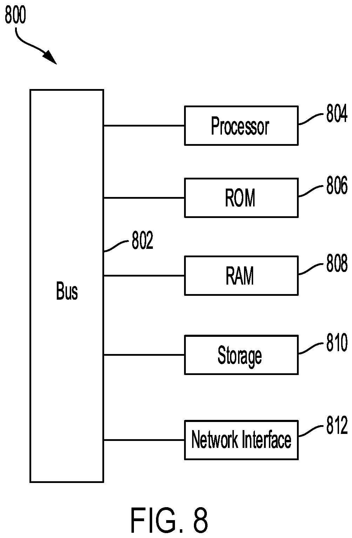

FIG. 8 is a block diagram of an exemplary system or device 800 within the system 200 such as the generic inference engine 204. The system 800 includes a processor 804, such as a central processing unit (CPU), and/or logic, that executes computer executable instructions for performing the functions, processes, and/or methods described herein. In some examples, the computer executable instructions are locally stored and accessed from a non-transitory computer readable medium, such as storage 810, which may be a hard drive or flash drive. Read Only Memory (ROM) 806 includes computer executable instructions for initializing the processor 804, while the random-access memory (RAM) 808 is the main memory for loading and processing instructions executed by the processor 804. The network interface 812 may connect to a wired network or cellular network and to a local area network or wide area network. The system 800 may also include a bus 802 that connects the processor 804, ROM 806, RAM 808, storage 810, and/or the network interface 812. The components within the system 800 may use the bus 802 to communicate with each other. The components within the system 800 are merely exemplary and might not be inclusive of every component within the controller 104. Additionally, and/or alternatively, the system 800 may further include components that might not be included within every entity of system 100. For instance, in some examples, the generic inference engine 204 might not include a network interface 812.

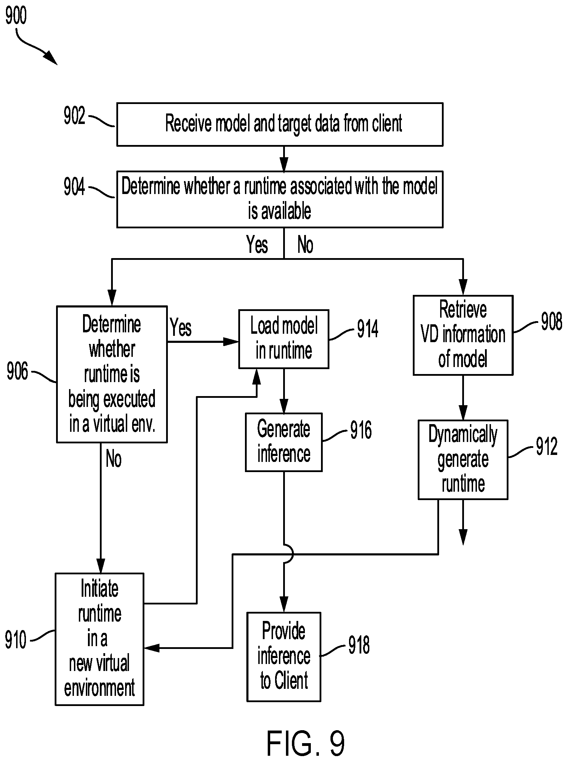

FIG. 9 illustrates an exemplary process for invoking a model using the generic inference engine, according to one or more examples of the present disclosure. The process 900 may be performed by the generic inference engine 204 of FIG. 3. However, it will be recognized that any of the following blocks may be performed in any suitable order and that the process 900 may be performed in any environment and by any suitable computing device and/or controller.

At 902, the generic inference engine 204 receives a model and target data from a client device 202.

At 904, the generic inference engine 204 determines whether a runtime associated with the model is available in the generic inference engine 204. For example, determining whether a runtime associated with the model is available in the generic inference engine 204 includes determining whether the model requires an ONNX runtime, or a PMMI, runtime, or a MATLAB runtime. The generic inference engine 204 includes preset runtimes corresponding to each of these runtimes. In case the model requires an ONNX runtime, a PMMI, runtime, or a MATLAB runtime, the generic inference engine 204 may retrieve a preset runtime corresponding to these runtimes. In some embodiments, the generic inference engine 204 may also search a tracking database to determine whether the model that is requested to be used by the user has been registered with the generic inference engine 204. In case the model is registered, a runtime associated with the model may be stored in a model runtime store 104b. In such cases, the runtime may be retrieved from the model runtime store using identifying information retrieved from the model.

In response to determining that the runtime associated with the model is available in the generic reference engine 204, the process 900 moves to 906 to determine whether the runtime is being executed in a virtual environment.

In response to determining that the runtime associated with the model is not available in the generic reference engine 204, the process 900 moves to 908 to retrieve identifying information associated with the model.

At 906, the generic inference engine 204 determines whether the runtime is being executed in a virtual environment. In response to determining that the runtime is being executed in the virtual environment, the process 900 moves to 914 to load the model in the runtime that is being executed. In response to determining that the runtime is not being executed, the process 900 moves to 910 where the generic inference engine 204 initiates a virtual environment to execute the runtime.

At 908, the generic inference engine 204 retrieves identifying information associated with the model. For example, the identifying information associated with the model may include a list of libraries and dependencies required for the execution of the model.

At 912, the generic inference engine 204 dynamically generates a runtime in a virtual environment based on the information retrieved from the model. For example, dynamically generating the runtime may include installing the libraries and dependent functions that are necessary for the model in the virtual environment. The dynamically generated runtime may also be stored in the model runtime store 104b for future reference.

At 914, the generic inference engine 204 loads the model in the runtime that is executed in the virtual environment.

At 916, the generic engine 204 provides the target data received from the client device 202 as an input to the model. The model analyzes the target data to generate an inference.

At 918, the determined inference is provided to the client device 202.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for generating an inference for target data using a generic inference engine, the method comprising:
receiving, from a client device, details of a model to be inferred and target data;
determining whether a runtime associated with the model is available in the generic inference engine;
determining whether the runtime is already executing in a virtual environment of the generic inference engine based on determining that the runtime associated with the model is available in the generic inference engine;
loading the model in the runtime, based on determining that the runtime is already executing in a virtual environment of the generic inference engine;
providing the target data as an input to the model;
receiving as an output from the model, an inference based on the target data; and
providing the inference to the client device.

2. The method of claim 1, wherein determining whether the runtime associated with the model is available in the generic inference engine comprises:
retrieving identifying information associated with the model;
determining, using the identifying information, whether the model received from the client requires an open neural network exchange (ONNX) or a predictive model markup language (PMML) runtime; and
retrieving a preset runtime as the runtime based on determining that the model received from the client requires the ONNX or the PMMI, runtime.

3. The method of claim 2, wherein based on determining that the model received from the client does not require the ONNX or the PMMI, runtime, the method further comprises:
determining, using the identifying information, whether the model is present in a model tracking database for the model;
retrieving a stored runtime associated with the model from an artifact store as the runtime based on determining that the model is present in the model tracking database.

4. The method of any one of the preceding claims, wherein based on determining that the runtime associated with the model is not available in the generic inference engine, the method further comprises:
retrieving identifying information associated with the model, wherein the identifying information comprises a list of libraries and dependencies required for the execution of the model;
dynamically generating the runtime based on the list of libraries and dependencies;
storing the runtime in a model runtime store;
executing the runtime in a new virtual environment of the generic inference engine; and
loading the model in the new virtual environment.

5. The method of any one of the preceding claims, wherein based on determining that the runtime is not already executing in a virtual environment of the generic inference engine, the method further comprises:
executing the runtime in a new virtual environment of the generic inference engine; and
loading the model in the new virtual environment.

6. The method of any one of the preceding claims, further comprising:
determining whether other models are being executed in the virtual environment; and
deactivating the virtual environment, based determining no other models are being executed in the virtual environment.

7. The method of claim 6, wherein based on determining that other models are being executed in the virtual environment, the method further comprises:
deactivating the virtual environment after the other models have completed execution.

8. The method of any one of the preceding claims, wherein determining whether the runtime associated with the model is available in the generic inference engine comprises:
retrieving identifying information associated with the model;
determining, using the identifying information, whether the model received from the client requires a MATLAB or an R runtime; and
retrieving a preset runtime as the runtime based on determining that the model received from the client requires a MATLAB or an R runtime.

9. A system for generating an inference for a target data using a generic inference engine, the system comprising:
a controller configured to:
receive, from a client device, details of a model to be inferred and target data;
determine whether a runtime associated with the model is available in the generic inference engine;
determine whether the runtime is already executing in a virtual environment of the generic inference engine based on determining that the runtime associated with the model is available in the generic inference engine;
load the model in the runtime, based on determining that the runtime is already executing in a virtual environment of the generic inference engine;
provide the target data as an input to the model;
receive as an output from the model, an inference based on the target data; and
provide the inference to the client device.

10. The system of claim 9, wherein determining whether the runtime associated with the model is available in the generic inference engine causes the controller to:
retrieve identifying information associated with the model;
determine, using the identifying information, whether the model received from the client requires an open neural network exchange (ONNX) or a predictive model markup language (PMML) runtime; and
retrieve a preset runtime as the runtime based on determining that the model received from the client requires the ONNX or the PMML runtime.

11. The system of claim 10, wherein based on determining that the model received from the client does not require the ONNX or the PMML runtime, the controller is further configured to:
determine, using the identifying information, whether the model is present in a model tracking database for the model;
retrieve a stored runtime associated with the model from an artifact store as the runtime based on determining that the model is present in the model tracking database.

12. The system of any one of claims 9 to 11, wherein based on determining that the runtime associated with the model is not available in the generic inference engine, the controller is further configured to:
retrieve identifying information associated with the model, wherein the identifying information comprises a list of libraries and dependencies required for the execution of the model;
dynamically generate the runtime based on the list of libraries and dependencies;
store the runtime in a model runtime store;
execute the runtime in a new virtual environment of the generic inference engine; and
load the model in the new virtual environment.

13. The system of any one of claims 9 to 12, wherein based on determining that the runtime is not already executing in a virtual environment of the generic inference engine, the controller is further configured to:
execute the runtime in a new virtual environment of the generic inference engine; and
load the model in the new virtual environment.

14. The system of any one of claims 9 to 13, wherein the controller is further configured to:
determine whether other models are being executed in the virtual environment; and
deactivate the virtual environment, based determining no other models are being executed in the virtual environment,
wherein preferably, based on determining that other models are being executed in the virtual environment, the system is further configured to:
deactivate the virtual environment after the other models have completed execution.

15. The system of any one of claims 9 to 14, wherein determining whether the runtime associated with the model is available in the generic inference engine causes the controller to:
retrieve identifying information associated with the model;
determine, using the identifying information, whether the model received from the client requires a MATLAB or an R runtime; and
retrieve a preset runtime as the runtime based on determining that the model received from the client requires a MATLAB or an R runtime.
